# EUROPEAN PATENT SPECIFICATION

(11) **EP 4 530 195 B1**
(45) Date of publication and mention of the grant of the patent: **06.05.2026**
(21) Application number: 23200511.6
(22) Date of filing: 28.09.2023
(51) Int. Cl.: B64D 37/04, B64D 37/06, B64C 3/34

(54) **AIRCRAFT TANK DEVICE FOR INCREASING A FLIGHT RANGE AND A WING AREA OF AN AIRCRAFT AS WELL AS AIRCRAFT**
FLUGZEUGTANKVORRICHTUNG ZUR ERHÖHUNG EINER FLUGREICHWEITE UND EINES FLÜGELBEREICHS EINES FLUGZEUGS SOWIE FLUGZEUG
DISPOSITIF DE RÉSERVOIR D'AÉRONEF POUR AUGMENTER LA PLAGE DE VOL ET LA ZONE D'AILE D'UN AÉRONEF AINSI QU'AÉRONEF

(43) Date of publication of application: 02.04.2025
(73) Proprietor: Airbus Operations GmbH, 21129 Hamburg (DE)
(72) Inventor: Benthien, Hermann, Hamburg (DE); Hegenbart, Matthias, Hamburg (DE)
(74) Representative: Isarpatent

(56) References cited:
- CA-A- 462 978
- CN-A- 108 945 488
- CN-B- 113 753 216
- FR-A1- 3 128 196
- GB-A- 2 591 255

## Description

The invention relates to an aircraft tank device for increasing a flight range and a wing area of an aircraft. The invention is furthermore concerned with an aircraft containing such an aircraft tank device.

It is very often necessary, especially on long range flights, for an aircraft to carry an additional supply of fuel to that normally required and installed in the aircraft. Such an additional fuel is generally carried in additional tanks on the outside of the aircraft, or, more particularly, for convenience and aerodynamic reasons, may be attached to the lower surface of the wing section. These tanks can be released or dropped off, thus reducing the load and drag factor on the aircraft or for safety reasons.

The fuel of the aircraft is normally installed in the body, the main wing, and the like with the fuel tank installed therein, but the capacity of the fuel tank is limited. In the case where further fuel is required additional tanks can be placed on the outside of the aircraft. In a conventional method, the additional tank is fixed in the outer shape and attached to the aircraft at the tip of the main wing, below the main wing or under the body. Conventionally, even if the fuel is empty in the additional tank, an additional tank having the same outer shape as that in the case where the fuel is fully loaded in the additional tank is attached, the surface area thereof is large, and the resistance of the aircraft is increased.

For example, document CA 462 978 A describes an airplane comprising a fuselage and a single wing of the stressed skin type, a box-like structure extending symmetrically on either side of the fore-and-aft plane of symmetry of the airplane beyond the confines of said fuselage and constituting by itself at least the middle portion and main stress resisting element of the stressed skin center wing section and being fluid-tightly closed so as to constitute a fuel tank.

FR 3128196 A1 - according to its abstract - discloses an airliner which has a wing consisting of a left part with a root and a right part with a root. The left part is being made up at a base of a box section profiled to have lift with an upper edge on an upper surface and a lower edge on a lower surface. The box section is attached to an outer edge. A half-wing in a front position and a half-wing in a rear position are being attached to the box section at different heights. The right part is being described in a similar way to the left part by mentioning a box, another half-wing in the forward position and another half-wing in the rear position.

Those known additional fuel tanks placed on the outside of the aircraft have the problem that may deteriorate the flight performance of the aircraft.

According to the invention, this problem is solved in each case by the subject matters of the independent claims.

According to a first aspect of the invention, an aircraft tank device for increasing a flight range and a wing area of an aircraft is provided. The aircraft tank device comprises a fairing which is formed and configured:
to at least partly cover an aircraft wing-aircraft fuselage intersection,
to store a fuel and
to provide a lifting function.

In particular, an aircraft tank device for increasing a flight range and a wing area of a passenger or cargo aircraft is provided.

According to a second aspect of the invention, an aircraft, in particular a passenger or cargo aircraft, comprising an aircraft tank device according to the first aspect of the invention is provided.

A fundamental concept of the invention is to provide an additional fuel tank device to that provided in the wings of the aircraft, wherein the additional fuel tank device can be equipped for current existing aircrafts as add-on, as well as for future aircrafts. A primary function of the fairing is to provide a smooth outline and reduce drag. The fairing can be used as a cover for gaps and spaces between parts of an aircraft to reduce form drag and interference drag, and to improve appearance. Furthermore, the aircraft tank device can store about 20 m³ to 60 m³, preferably about 40 m³, additional fuel. In particular, the fairing is formed to increase a wing area for providing the lifting function.

A particular advantage in the solution according to an aspect of the invention is that the aircraft tank device provides more fuel storage capacity without the need for a wing redesign nor the need to use the cargo capacity, which could be equipped with so-called additional center tanks, for example. Therefore, it is possible to store less fuel inside the fuselage. Moreover, fuels with a higher volume request, like hydrogen, can be stored in the aircraft, wherein the added tank volume is provided outside the standard fuselage.

Another advantage is that in case of water landing a crash and swimming behavior of the aircraft can be optimized by the aircraft tank device according to the invention. Further, the flight range can be extended and a lift of the aircraft can be increased. By increasing the wing area the additional weight of the aircraft tank device can be compensated. Thus, the aircraft tank device comprises a lifting body design which also provides a function for on water landing.

Further, the aircraft tank device is substantially positioned in the center of mass of the aircraft, advantageously. In particular, the landing gear function is not disturbed by the present invention.

Advantageous embodiments and further developments emerge from the description with reference to the figures.

According to some aspects of the invention, the fairing is connectable to an aircraft fuselage and/or an aircraft wing. The aircraft tank device can be equipped for current existing aircrafts, in particular for current existing aircraft fuselages and/or current existing aircraft wings, as add-on, as well as for future aircrafts. The aircraft tank device may configure a module that sticks into a standard aircraft fuselage. The fairing can store liquid and/or gaseous fuels, for example kerosene. Thus, a flexibility between long and short range flights can be provided.

According to some further aspects of the invention, the fairing is configured as a belly fairing. The belly fairing, also called a ventral fairing, is located on a bottom side of the aircraft fuselage between the main aircraft wings. The belly fairing can also cover a cargo storage compartment.

According to some further aspects of the invention, the fairing is configured to be replaceable such that a size and/or form of the fairing can be chosen depending on a flight distance. Thus, a smaller aircraft tank device can be installed at an aircraft for short range flights. A larger aircraft tank device can be installed at an aircraft for long range flights. The replaceable fairing provides a flexible module that can be chosen depending on the specific needs for each flight.

According to some further aspects of the invention, the aircraft tank device further comprises a pressurized container at least partly enclosed by the fairing, wherein the pressurized container is configured to contain a cryogenic medium. For example, the pressurized container can be configured as a cryogenic tank. The pressurized container may contain liquid hydrogen.

According to some further aspects of the invention, the aircraft tank device further comprises a pilot valve, a vent pressure valve and a vent box being positioned inside the fairing. The pilot valve is a small valve that controls a limited-flow control feed to a separate piloted valve. Typically, this separate valve controls a high pressure or high flow feed. Pilot valves are useful because they allow a small and easily operated feed to control a much higher pressure or higher flow feed, which would otherwise require a much larger force to operate. The vent pressure valve allows evacuation of the overpressure or vacuum produced in an atmospheric tank during filling and emptying, or the pressure variations generated by changes in temperature, atmospheric pressure or by the variation in temperature of the fluid or the tank like failure in heating, tracing or heat exchangers.

According to the invention, the aircraft tank device further comprises a plurality of hinges for attaching the fairing to an aircraft fuselage and/or an aircraft wing. A position of the hinges may correspond to a position of similar hinges of conventional fairings such that the aircraft tank device can be used and interchanged with other modules of an aircraft.

According to some further aspects of the invention, the stored fuel is distributed inside the fairing such that a mass center of the aircraft tank device substantially corresponds to a mass center of an aircraft.

According to some further aspects of the invention, the aircraft tank device further comprises a fuel and air quick disconnecting element. Thus, the aircraft tank device can be mounted and dismounted quicker and easier. Furthermore, unused fuel left in the aircraft tank device can be kept in the aircraft tank device safely during mounting/dismounting and handling processes.

According to some further aspects of the invention, the aircraft further comprises an aircraft fuselage and an aircraft wing, wherein the aircraft tank device is configured as a conformal fuel tank fitted to an outer skin of the aircraft fuselage and of the aircraft wing.

According to some further aspects of the invention, the aircraft tank device is fluidly connected to a standard fueling and transfer line. The aircraft is a multi-engine passenger or cargo aircraft, for example. A fuel system of such an aircraft may comprise multiple fuel tanks which may be located in the wing, in the fuselage or both. Each tank can be equipped with an internal fuel pump and have the associated valve and plumbing to feed the engines, allow for refueling and defueling, isolate the individual tanks and, in some applications, allow for fuel dumping or for optimization of aircraft center of gravity. The standard fueling and transfer line fluidly connects the multiple tanks, the aircraft tank device and the engine of the aircraft.

According to some further aspects of the invention, the fairing covers at least an upper side of the aircraft wing-aircraft fuselage intersection. Furthermore, the fairing may cover a lower side of the aircraft wing-aircraft fuselage intersection sectionwise, in particular in a front section and/or a rear section of the aircraft wing-aircraft fuselage intersection.

Optionally, the outer skin of the aircraft tank device can have an area for affixing advertisement.

The present invention is explained more specifically below on the basis of the exemplary embodiments indicated in the schematic figures, in which:
- Fig. 1: shows a schematic illustration of an aircraft tank device for increasing a flight range and a wing area of an aircraft according to an embodiment of the invention;
- Fig. 2: shows a top view of a conventional aircraft as known in the prior art;
- Fig. 3: shows a front view of the conventional aircraft according to Fig. 2;
- Fig. 4: shows a top view of a schematic illustration of an aircraft according to an embodiment of the invention comprising an aircraft tank device according to a further embodiment of the invention;
- Fig. 5: shows a front view of the aircraft according to Fig. 4;
- Fig. 6: shows a cut view of a schematic illustration of an aircraft according to a further embodiment of the invention comprising an aircraft tank device according to a further embodiment of the invention;
- Fig. 7: shows a cut view of a schematic illustration of an aircraft according to a further embodiment of the invention comprising an aircraft tank device having a pressurized container according to a further embodiment of the invention;
- Fig. 8: shows a perspective view of a schematic illustration of an aircraft with a lowered landing gear according to a further embodiment of the invention comprising an aircraft tank device according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

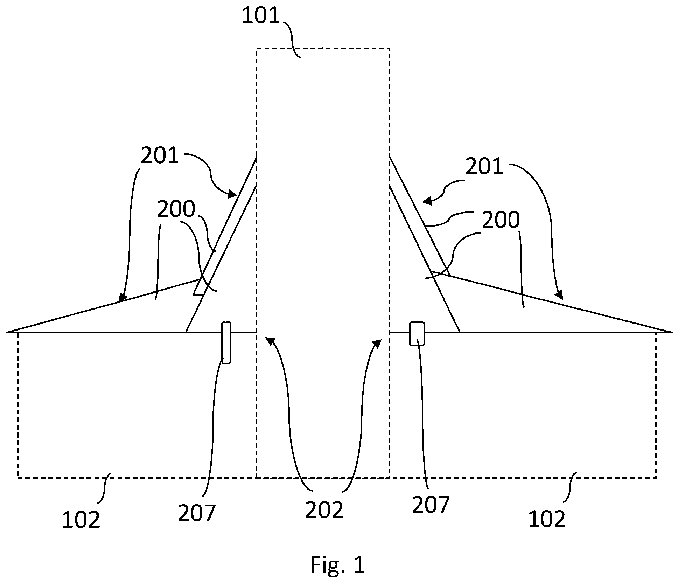

Fig. 1 shows a schematic illustration of an aircraft tank device 200 for increasing a flight range and a wing area of an aircraft according to an embodiment of the invention.

The aircraft tank device 200 comprises a fairing 201 which is formed and configured to at least partly cover an aircraft wing-aircraft fuselage intersection 202 and to store a fuel. The fairing 201 can store about 30 m³ to about 50 m³, in particular about 40 m³, fuel.

Further, the fairing 201 is formed and configured to provide a lifting function. The lifting function can be provided by an increased wing area. The fairing 201 is connectable to an aircraft fuselage 101 and an aircraft wing 102. Therefore, the fairing 201 may comprise an optimized aerodynamic form. The aircraft tank device 200 further comprises at least two hinges 207 for attaching the fairing 201 to the aircraft wing 102. The aircraft tank device 200 may further comprise a plurality of hinges 207 for attaching the fairing 201 to the aircraft fuselage 101. A position of the hinges 207 may correspond to a position of similar hinges of conventional fairings such that the aircraft tank device 200 can be used and interchanged with other modules of an aircraft.

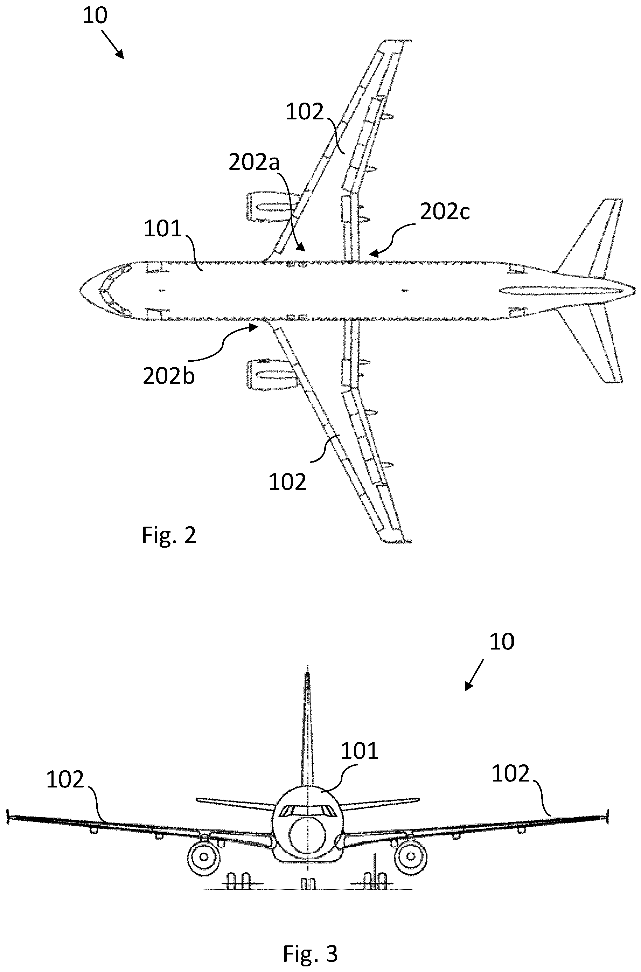

Figs. 2 and 3 show a conventional aircraft 10 as known in the prior art, illustrated in a top view (Fig. 2) and a front view (Fig. 3). The aircraft 10 is configured as a passenger or cargo aircraft.

The conventional aircraft 10 comprises an aircraft fuselage 101, two aircraft wings 102 and a rudder/elevator at the rear end of the aircraft fuselage 101. A section where the two aircraft wings 102 are connected to the aircraft fuselage 101 is called an aircraft wing-aircraft fuselage intersection 202. The aircraft wing-aircraft fuselage intersection 202 can be specified to an upper side 202a, a front section 202b and a rear section 202c.

A fairing of the aircraft wing-aircraft fuselage intersection 202 for the conventional aircraft 10 covers substantially the mechanical connection between the aircraft fuselage 101 and the aircraft wings 102. Thus, the fairing is relatively small and kept to a minimum size.

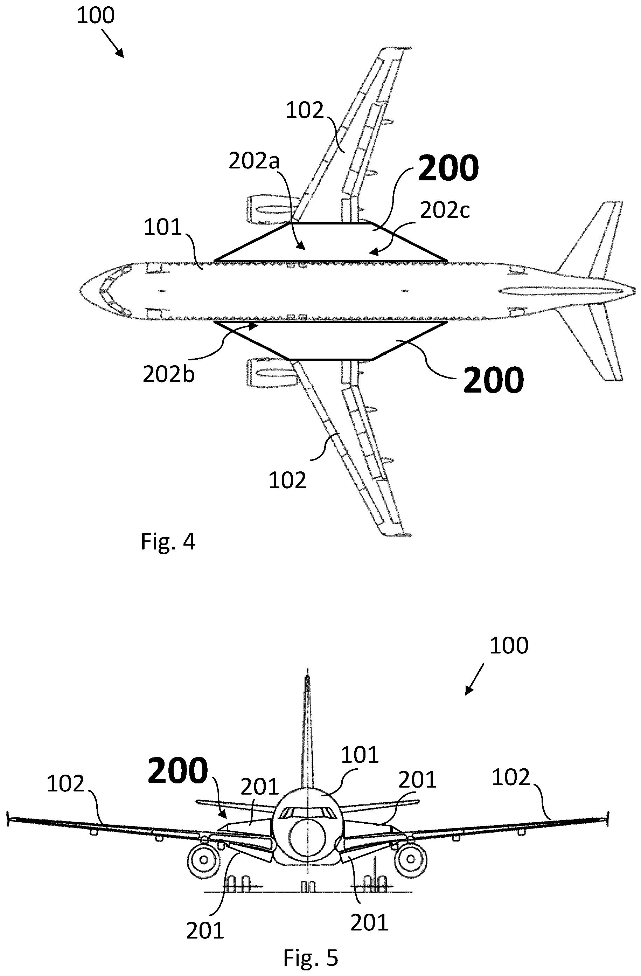

Figs. 4 and 5 show a schematic illustration of an aircraft 100 according to an embodiment of the invention comprising an aircraft tank device 200 according to a further embodiment of the invention. Specifically, Fig. 4 illustrates a top view and Fig. 5 a front view of the aircraft 100.

The aircraft 100 of Figs. 4 and 5 substantially differs from the conventional aircraft 10 of Figs. 2 and 3 in that the aircraft 100 comprises an aircraft tank device 200.

In particular, the aircraft 100 comprises an aircraft fuselage 101 and two aircraft wings 102, wherein the aircraft tank device 200 is configured as a conformal fuel tank fitted to an outer skin of the aircraft fuselage 101 and of the aircraft wings 102. The conformal fuel tank 200 comprises a fairing 201 which is formed and configured to partly cover the aircraft wing-aircraft fuselage intersection 202 and to store a fuel. Further, the fairing 201 is formed and configured to provide a lifting function. The lifting function can be provided by an increased wing area, as it is exemplarily illustrated in Fig. 4. Here, the fairing 201 is configured as a belly fairing. The belly fairing 201, also called ventral fairing, is located on a bottom side of the aircraft fuselage 101 between the two aircraft wings 102. For example, the fairing 201 has a trapezoidal shape.

Further, the fairing 201 is configured to be replaceable such that a size and/or form of the fairing 201 can be chosen depending on a flight distance. Thus, the replaceable fairing 201 can be changed to a small fairing for short range flights or a larger fairing for long range flights. For example, the conformal fuel tank 200 can contain up to about 40 m³, in particular up to about 55 m³, fuel in addition to the fuel mainly stored in a second fuel tank which is integrated in the two aircraft wings 102. The stored fuel is distributed inside the fairing 201 such that a mass center of the conformal fuel tank 200 substantially corresponds to a mass center of the aircraft 100.

In Fig. 5 it is illustrated that the fairing 201 covers an upper side 202a and sectionwise a lower side of the aircraft wing-aircraft fuselage intersection 202. Furthermore, the fairing 201 covers a front section 202b and a rear section 202c of the aircraft wing-aircraft fuselage intersection 202.

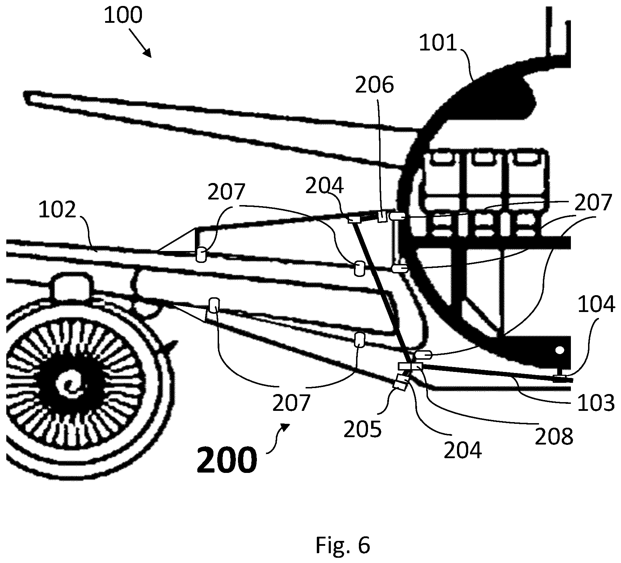

Fig. 6 shows a cut view of a schematic illustration of an aircraft 100 according to a further embodiment of the invention comprising an aircraft tank device 200 according to a further embodiment of the invention.

The exemplary aircraft tank device 200 comprises a pilot valve 204, a vent pressure valve 205, a vent box 206, a plurality of hinges 207 and a fuel and air quick disconnecting element 208.

The pilot valve 204, the vent pressure valve 205 and the vent box 206 are positioned inside the fairing 201, for example. The pilot valve 204, the vent pressure valve 205, the vent box 206 and the fuel and air quick disconnecting element 208 are connected via a standard fueling and transfer line 103 of the aircraft 100. The standard fueling and transfer line 103 is further connected to a refueling and transfer shutoff valve 104 of the aircraft 100. Additionally, the fuel and air quick disconnecting element 208 can have an integrated refueling and transfer shutoff valve. With the fuel and air quick disconnecting element 208 and the refueling and transfer shutoff valve, respectively, the aircraft tank device 200 can be mounted and dismounted quicker and easier. Furthermore, unused fuel left in the aircraft tank device 200 can be kept in the aircraft tank device safely during mounting/dismounting and handling processes.

The standard fueling and transfer line 103 specifically fluidly connects the refueling and transfer shutoff valve 104 with the fuel and air quick disconnecting element 208, further the fuel and air quick disconnecting element 208 with the pilot valve 204, in particular the fuel high level pilot valve 204 and the fuel low level pilot valve 204, respectively. The vent pressure valve 205 is fluidly connected with the fuel low level pilot valve 204, and the vent box 206 is fluidly connected with the fuel high level pilot valve 204.

The vent pressure valve 205 allows evacuation of the overpressure or vacuum produced in an atmospheric tank during filling and emptying, or the pressure variations generated by changes in temperature, atmospheric pressure or by the variation in temperature of the fluid or the tank like failure in heating, tracing or heat exchangers.

The plurality of hinges 207 is configured for attaching the fairing 201 to the aircraft fuselage 101 and the two aircraft wings 102. Two of the plurality of hinges 207 attach the fairing 201 to the lower side of the aircraft wing 102, and another two of the plurality of hinges 207 attach the fairing 201 to the upper side of the aircraft wing 102, for example. Another two hinges 207 attach the fairing 201 to the aircraft fuselage 101 above the aircraft wing 102, wherein a further hinge 207 attaches the fairing 201 to the aircraft fuselage 101 below the aircraft wing 102, for example. A position of the hinges 207 may correspond to a position of similar hinges of conventional fairings such that the aircraft tank device 200 can be used and interchanged with other modules of an aircraft 100.

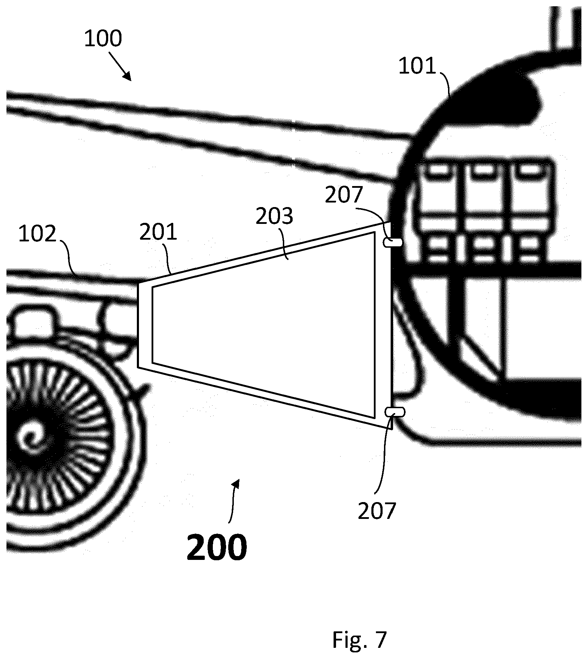

Fig. 7 shows a cut view of a schematic illustration of an aircraft 100 according to a further embodiment of the invention comprising an aircraft tank device 200 having a pressurized container 203 according to a further embodiment of the invention. Specifically, the cut view is illustrated at a front section 202b, that means in front of the aircraft wing 102.

The aircraft tank device 100 substantially comprises the same features as the aircraft tank device of Fig. 1, 4, 5 or 6, wherein the aircraft tank device 100 of Fig. 7 further comprises a pressurized container 203 partly or completely enclosed by the fairing 201. The pressurized container 203 is configured to contain a cryogenic medium, in particular liquid hydrogen. For example, the pressurized container 203 can be configured as a cryogenic tank.

At the front section 202b the fairing 201 can be hinged to the aircraft fuselage 101 by two hinges 207, for example.

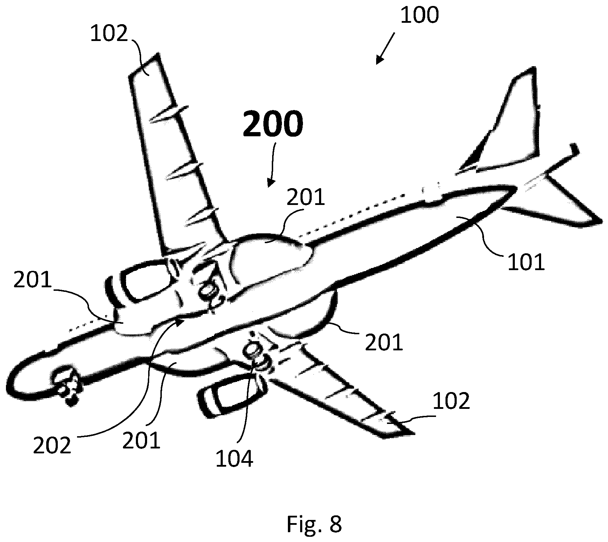

Fig. 8 shows a perspective view of a schematic illustration of an aircraft 100 with a lowered landing gear 105 according to a further embodiment of the invention comprising an aircraft tank device 200 according to a further embodiment of the invention. In particular, Fig. 8 illustrates a bottom perspective view of the aircraft 100.

The aircraft tank device 200 can be configured as one of the aircraft tank devices described in Figs. 1, 4, 5, 6 and 7. A fairing 201 of the aircraft tank device 200 is arranged at a front section and a rear section of an aircraft wing-aircraft fuselage intersection 202. Thereby, the aircraft tank device 200 enlarges a wing area of the aircraft wings 102. Fig. 8 clearly shows that the landing gear 105 can work as it is known in the prior art and not disturbed by the aircraft tank device 200.

The aircraft tank device 200 as described above in the Figs. 1, 4, 5, 6, 7 and 8 can be adapted and used for any aircraft type, like a military, a passenger or a cargo aircraft. The fairing 201 can be configured as any wing-to-fuselage fairing. Alternatively or additionally, the aircraft tank device 200 may comprise a trailing edge fairing for storing fuel.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications may be apparent to one of ordinary skill in the art and can be made without departing from the scope of the appended claims.

In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

### Reference list

- 100: aircraft
- 101: aircraft fuselage
- 102: aircraft wing
- 103: fueling and transfer line
- 104: refueling and transfer shutoff valve
- 105: landing gear

- 200: aircraft tank device
- 201: fairing
- 202: aircraft wing-aircraft fuselage intersection
- 202a: upper side
- 202b: front section
- 202c: rear section
- 203: pressurized container
- 204: pilot valve
- 205: vent pressure valve
- 206: vent box
- 207: plurality of hinges
- 208: fuel and air quick disconnecting element

## Claims

1. Aircraft tank device (200) for increasing a flight range and a wing area of an aircraft (100), in particular of a passenger or cargo aircraft, the aircraft tank device (200) comprising a fairing (201) which is formed and configured:
- to at least partly cover an aircraft wing-aircraft fuselage intersection (202),
- to store a fuel and
- to provide a lifting function;
wherein the aircraft tank device (200) further comprises a plurality of hinges (207) for attaching the fairing (201) to an aircraft fuselage (101) and/or an aircraft wing (102).

2. Aircraft tank device (200) according to claim 1, wherein the fairing (201) is connectable to an aircraft fuselage (101) and/or an aircraft wing (102).

3. Aircraft tank device (200) according to claim 1 or 2, wherein the fairing (201) is configured as a belly fairing.

4. Aircraft tank device (200) according to one of the preceding claims, wherein the fairing (201) is configured to be replaceable such that a size and/or form of the fairing (201) can be chosen depending on a flight distance.

5. Aircraft tank device (200) according to one of the preceding claims, further comprising a pressurized container (203) at least partly enclosed by the fairing (201), wherein the pressurized container (203) is configured to contain a cryogenic medium.

6. Aircraft tank device (200) according to one of the preceding claims, further comprising a pilot valve (204), a vent pressure valve (205) and a vent box (206) being positioned inside the fairing (201).

7. Aircraft tank device (200) according to one of the preceding claims, further comprising a fuel and air quick disconnecting element (208).

8. Aircraft (100), in particular passenger or cargo aircraft, comprising an aircraft tank device (200) according to one of the preceding claims.

9. Aircraft (100) according to claim 8, further comprising an aircraft fuselage (101) and an aircraft wing (102), wherein the aircraft tank device (200) is configured as a conformal fuel tank fitted to an outer skin of the aircraft fuselage (101) and of the aircraft wing (102).

10. Aircraft (100) according to claim 8 or 9, wherein the aircraft tank device (200) is fluidly connected to a standard fueling and transfer line (103).

11. Aircraft (100) according to one of the claims 8 to 10, wherein the fairing (201) covers at least an upper side (202a) of the aircraft wing-aircraft fuselage intersection (202).

## Patentansprüche

1. Flugzeugtankvorrichtung (200) zum Erhöhen einer Flugreichweite und einer Flügelfläche eines Flugzeugs (100), insbesondere eines Passagier- oder Frachtflugzeugs, wobei die Flugzeugtankvorrichtung (200) eine Verkleidung (201) umfasst, die gebildet und ausgelegt ist zum:
- zumindest teilweisen Bedecken eines Flugzeugflügel-Flugzeugrumpf-Schnittbereichs (202),
- Speichern eines Treibstoffs und
- Bereitstellen einer Hubfunktion;
wobei die Flugzeugtankvorrichtung (200) ferner mehrere Scharniere (207) zum Befestigen der Verkleidung (201) an einem Flugzeugrumpf (101) und/oder einem Flugzeugflügel (102) umfasst.

2. Flugzeugtankvorrichtung (200) nach Anspruch 1, wobei die Verkleidung (201) mit einem Flugzeugrumpf (101) und/oder einem Flugzeugflügel (102) verbindbar ist.

3. Flugzeugtankvorrichtung (200) nach Anspruch 1 oder 2, wobei die Verkleidung (201) als eine Bauchverkleidung ausgelegt ist.

4. Flugzeugtankvorrichtung (200) nach einem der vorhergehenden Ansprüche, wobei die Verkleidung (201) so ausgelegt ist, dass sie austauschbar ist, sodass eine Größe und/oder Form der Verkleidung (201) in Abhängigkeit von einer Flugdistanz gewählt werden kann.

5. Flugzeugtankvorrichtung (200) nach einem der vorhergehenden Ansprüche, ferner umfassend einen Druckbehälter (203), der zumindest teilweise von der Verkleidung (201) umschlossen ist, wobei der Druckbehälter (203) dazu ausgelegt ist, ein kryogenes Medium zu enthalten.

6. Flugzeugtankvorrichtung (200) nach einem der vorhergehenden Ansprüche, ferner umfassend ein Vorsteuerventil (204), ein Entlüftungsdruckventil (205) und einen Entlüftungskasten (206), die innerhalb der Verkleidung (201) positioniert sind.

7. Flugzeugtankvorrichtung (200) nach einem der vorhergehenden Ansprüche, ferner umfassend ein Kraftstoff- und Luft-Schnelltrennelement (208).

8. Flugzeug (100), insbesondere Passagier- oder Frachtflugzeug, umfassend eine Flugzeugtankvorrichtung (200) nach einem der vorhergehenden Ansprüche.

9. Flugzeug (100) nach Anspruch 8, ferner umfassend einen Flugzeugrumpf (101) und einen Flugzeugflügel (102), wobei die Flugzeugtankvorrichtung (200) als ein konformer Kraftstofftank ausgelegt ist, der an einer Außenhaut des Flugzeugrumpfs (101) und des Flugzeugflügels (102) angebracht ist.

10. Flugzeug (100) nach Anspruch 8 oder 9, wobei die Flugzeugtankvorrichtung (200) mit einer Standard-Betankungs- und -Transferleitung (103) fluidverbunden ist.

11. Flugzeug (100) nach einem der Ansprüche 8 bis 10, wobei die Verkleidung (201) mindestens eine Oberseite (202a) des Flugzeugflügel-Flugzeugrumpf-Schnittbereichs (202) bedeckt.

## Revendications

1. Dispositif de réservoir d'aéronef (200) pour augmenter une portée de vol et une surface alaire d'un aéronef (100), en particulier d'un aéronef de passagers ou de fret, le dispositif de réservoir d'aéronef (200) comprenant un carénage (201) qui est formé et conçu pour :
- recouvrir au moins en partie une intersection aile d'aéronef-fuselage d'aéronef (202),
- stocker un carburant et
- assurer une fonction de levage ;
le dispositif de réservoir d'aéronef (200) comprenant en outre une pluralité de charnières (207) pour fixer le carénage (201) à un fuselage d'aéronef (101) et/ou une aile d'aéronef (102).

2. Dispositif de réservoir d'aéronef (200) selon la revendication 1, le carénage (201) pouvant être relié à un fuselage d'aéronef (101) et/ou à une aile d'aéronef (102).

3. Dispositif de réservoir d'aéronef (200) selon la revendication 1 ou 2, le carénage (201) étant conçu comme un carénage ventral.

4. Dispositif de réservoir d'aéronef (200) selon l'une des revendications précédentes, le carénage (201) étant conçu pour être remplaçable de sorte à pouvoir choisir une taille et/ou une forme du carénage (201) en fonction d'une distance de vol.

5. Dispositif de réservoir d'aéronef (200) selon l'une des revendications précédentes, comprenant en outre un contenant pressurisé (203) au moins en partie enserré par le carénage (201), le contenant pressurisé (203) étant conçu pour contenir un milieu cryogénique.

6. Dispositif de réservoir d'aéronef (200) selon l'une quelconque des revendications précédentes, comprenant en outre une vanne pilote (204), une soupape de pression de mise à l'air libre (205) et un réservoir de mise à l'air libre (206) positionnés à l'intérieur du carénage (201).

7. Dispositif de réservoir d'aéronef (200) selon l'une des revendications précédentes, comprenant en outre un élément de déconnexion rapide (208) de carburant et d'air.

8. Aéronef (100), en particulier aéronef de passagers ou de fret, comprenant un dispositif de réservoir d'aéronef (200) selon l'une des revendications précédentes.

9. Aéronef (100) selon la revendication 8, comprenant en outre un fuselage d'aéronef (101) et une aile d'aéronef (102), le dispositif de réservoir d'aéronef (200) étant conçu comme un réservoir de carburant conforme monté sur une peau extérieure du fuselage d'aéronef (101) et de l'aile d'aéronef (102).

10. Aéronef (100) selon la revendication 8 ou 9, le dispositif de réservoir d'aéronef (200) étant raccordé fluidiquement à une conduite de ravitaillement et de transfert standard (103).

11. Aéronef (100) selon l'une des revendications 8 à 10, le carénage (201) recouvrant au moins un côté supérieur (202a) de l'intersection aile d'aéronef-fuselage d'aéronef (202).
